**Europäisches Patentamt**

**European Patent Office**

**Office européen des brevets**

(19)

(11) Veröffentlichungsnummer : **0 101 830**
**B1**

(12) **EUROPÄISCHE PATENTSCHRIFT**

(45) Veröffentlichungstag der Patentschrift :
26.03.86

(21) Anmeldenummer : 83106371.4

(22) Anmeldetag : 30.06.83

(51) Int. Cl.⁴ : **C 02 F   1/52**, C 02 F   9/00,
**E 21 B 21/06**

(54) Verfahren zur Entsorgung verbrauchter Tiefbohrspülungen.

(30) Priorität : 03.07.82 DE 3224958
09.12.82 DE 3245593

(43) Veröffentlichungstag der Anmeldung :
07.03.84 Patentblatt 84/10

(45) Bekanntmachung des Hinweises auf die Patenterteilung : 26.03.86 Patentblatt 86/13

(84) Benannte Vertragsstaaten :
AT CH DE FR LI NL

(56) Entgegenhaltungen :
US-A- 2 345 828
US-A- 3 694 356
US-A- 4 035 289
US-A- 4 141 824
US-A- 4 234 421

(73) Patentinhaber : **Kappler, Wolfgang**
**Schacher Strasse 20**
**D-7982 Baienfurt (DE)**

(72) Erfinder : **Kappler, Wolfgang**
**Schacher Strasse 20**
**D-7982 Baienfurt (DE)**
**Die weiteren Erfinder haben auf ihre Nennung**
**verzichtet**

(74) Vertreter : **Patentanwälte Dipl.-Ing. E. Eisele Dr.-Ing.**
**H. Otten**
**Seestrasse 42**
**D-7980 Ravensburg (DE)**

## Beschreibung

Die Erfindung betrifft ein Verfahren zur Entsorgung verbrauchter Tiefbohrspülungen aus quellfähigem Tonmineral (Bentonit), der in Wasser aufgeschlämmt ist und einem Spülungszusatz wie Carboxymethylcellulose (CMC).

Tiefbohrungen werden im In- und Ausland zur Erschliessung von Erdgas bzw. Erdöl niedergebracht. Je nach Abführung des Bohrkleins unterscheidet man zwischen Trockenbohren und Spülbohren. Beim Spülbohren wird dem Bohrloch durch das Bohrgestänge die sogenannte Spülung zugeführt, die mehreren Aufgaben gerecht werden muß. Sie muß in erster Linie die Gesteinstrümmer, das Bohrklein, von der Bohrlochsohle abführen, um sie wieder freizumachen. Außerdem muß sie das Bohrwerkzeug kühlen, d. h. durch Reibung entstehende Wärme abführen. Weiter verhindert die Flüssigkeit die Staubbildung. Bei Tiefbohrungen werden gogenannte Trübe- oder Dickspülungen verwendet, die zusätzlich die Aufgabe der Abdichtung der Bohrlochwandung im unverrohrten Teil haben und die dem Schutz gegen Gasausbrüche dienen. Dies wird unter anderem durch Tonmineralzusätze zum Wasser erreicht. Die Tonmineralspülung auf Wasserbasis wird für Tiefbohrungen verwendet. Dabei erfolgt die Aufschlämmung von quellfähigem Ton, meist Natriumbentonit, in Wasser. Die Ausflockung des Bentonits durch Elektrolyte sowie zu große Wasserabgabe wird durch sogenannte Schutzkolloide (z. B. Carboxymethylcellulose (CMC) und anderen Spülungszusätzen beeinflußt. Die Spülung muß von Zeit zu Zeit regeneriert werden, wobei ein Teil der Spülung von der Bohranlage ausgeschert und entsorgt werden muß. Diese Entsorgung von verbrauchten Spülungen geschah bisher meist in speziellen Gruben, an deren Bodenbeschaffenheit spezielle Anforderungen gestellt wurden. Insbesondere darf die verbrauchte Spülung nicht in Kontakt mit Grundwasser kommen, sodaß nur wasserundurchlässige alte Tongruben als Lagerstätte verwendet werden konnten. Die Bestandteile Bentonit und CMC in der Spülung sind stark wasserbindend, sodaß sie im Gegensatz zu üblichem Schlamm schwer absetzbar sind. Dies führte dazu, daß derartige Gruben über einen langen Zeitraum von vielen Jahren nicht mehr verwendet werden können. Deshalb werden von den Behörden derartige Gruben zur Lagerung von verbrauchter Tiefbohrspülung nur unter erschwerten Bedingungen oder gar nicht genehmigt.

In der US-A-4 035 289 wird ein Verfahren beschrieben, bei welchem eine verbrauchte Tiefbohrspülung mittels einer physiko-chemischen Behandlung und danach mittels einer biologischen Behandlung abgebaut wird. Die Durchführung dieses Verfahrens in einer kommunalen Kläranlage wird nicht vorgeschlagen.

Bei dem weiterhin in der US-A-4 141 824 beschriebenen Wasseraufbereitungsverfahren wurde erkannt, daß die Zugabe eines aus einer verbrauchten Tiefbohrspülung gewonnenen Feststoffes günstige Wirkungen auf die Filtrierung eines Trinkwassers verursacht. Dieses Verfahren betrifft jedoch nicht die Aufbereitung eines Abwassers.

Aus der US-A-2 345 828 ist weiterhin die Anwendung eines quellfähigen Tonminerals als Hilfsmittel bei der Behandlung eines Abwassers bekannt. Hierbei wird die Verwendung einer verbrauchten Tiefbohrspülung als eine Quelle des Tonminerals nicht in Erwägung gezogen.

Der Erfindung liegt die Aufgabe zugrunde, ein Verfahren zur Entsorgung von verbrauchten Tiefbohrspülungen zu ermitteln, welches nicht mehr abhängig ist von den herkömmlichen Gruben und durch welches eine umweltfreundliche Beseitigung der anfallenden Spülung möglich ist. Diese Aufgabe wird durch den Anspruch 1 und insbesondere dadurch gelöst, daß die Entsorgung der Spülung in einer an sich bekannten kommunalen Kläranlage für Haushalte erfolgt. Dies kann insbesondere dadurch geschehen, daß die Spülung dem Abwasser der Kläranlage dosiert zugegeben wird, so daß in jeder Abwasser-Reinigungsstufe ein Abbau der organischen Inhaltsstoffe der Spülung bzw. eine Vermischung und Verdünnung der Spülung und damit eine Herabsetzung des Sauerstoffbedarfs der Spülung erfolgt, wobei zur Entlastung der biologischen Stufe der Kläranlage das so verdünnte Tonmineral (Bentonit) der Spülung als anorganisches Flockungsmittel in der kommunalen Kläranlage verwendet wird und zur Abscheidung nicht- oder schwer absetzbarer Schwebstoffe bzw. kolloidal gelöster Substanzen dient. Eventuelle restliche Teile des Tonminerals sowie des CMC können in einer biologischen Abwasserreinigungsstufe verarbeitet werden.

In der Abwasserreinigung ist es bekannt, häusliche oder auch gewerbliche Abwasser in mehr oder weniger aufwendigen Verfahren zu reinigen, um es der sogenannten Vorflut wieder zuführen zu können. So werden oft zur Reinigung des Abwassers mechanische, biologische und chemische Reinigungsstufen hintereinander geschaltet. Bei der biologischen Reinigungsstufe ist besonders das Belebtschlammverfahren zu erwähnen.

Die Abwasserreinigung ist im allgemeinen ganz speziell auf die anfallenden Abwasser ausgerichtet. Es werden jedoch im allgemeinen häusliche und gewerbliche Abwasser gemeinsam behandelt, d. h. kommunale Abwasserreinigungsanlagen verarbeiten im allgemeinen alle in ihrem Einzugsgebiet anfallende Abwasser.

Kern der Erfindung ist es nun, die beim Tiefbohren anfallende verbrauchte Tiefbohrspülung durch eine kommunale Abwasser-Kläranlage zu verarbeiten. Dabei soll sichdas Verfahren positiv auf den Klärungsprozeß sowie auf dessen Ergebnis auswirken. Zunächst ist man davon ausgegangen, daß die Zufuhr einer derart konzentrierten Lösung, wie es eine Tiefbohrspülung darstellt, das Gleichgewicht einer Kläranlage negativ beeinflußt. Die anfallende Spülflüssigkeit hat nämlich z. B. folgende Zusammensetzung : 1 cbm Flüssigkeit enthält 50 kg Bentonit (Tonmineral) und 10 kg Carboxymethylcellulose (CMC). Umfangreiche Versuche haben nun ergeben, daß eine dosierte Zuführung der Spülung zur Kläranlage dem Reinigungsverlauf des Abwassers nicht schadet, sondern diesen positiv beeinflußt. In ausreichender Verdünnung der Spülung wirkt sich nämlich das Bentonit (Tonmineral) als Flockungsmittel aus und dient demnach in der mechanischen Reinigungsstufe als Adsorptionsmittel, zur Abscheidung nicht- oder schwer absetzbarer Schwebstoffe und kolloidal gelöster Substanzen. Durch den Einsatz der Tiefbohrspülung kann deshalb der Zusatz von anderen Flockungsmitteln wie Eisensulfat, Eisenchlorid in Verbindung mit Kalk oder hochmolekulare organische Flockungshilfsmittel gegebenenfalls eingespart werden. Im übrigen verarbeitet eine herkömmliche kommunale Kläranlage die anfallende Tiefbohrspülung ohne weiteres, sofern eine ausreichende Verdünnung und Vermischung stattfindet. In der biologischen Reinigungsstufe der Kläranlage wird der restliche Anteil des Tonminerals sowie der Carboxymethylcellulose (CMC) verarbeitet. Der in der Kläranlage anfallende Klärschlamm wird durch das zugeführte Bentonit (Tonmineral) für die Landwirtschaft wertvoller, da dieser Zusatz zur Bodenverbesserung beiträgt.

Das Verfahren zeichnet sich deshalb durch Verbesserung der Absetzwirkung von Schwebstoffen im kommunalen Abwasser aus, sowie durch umweltfreundliche Entsorgung von anfallender verbrauchter Tiefbohrspülung. Der anfallende Klärschlamm ist durch das erfindungsgemäße Verfahren für eine landwirtschaftliche Nutzung ebenfalls verbessert worden.

Durch die in den Unteransprüchen aufgeführten Maßnahmen ist eine vorteilhafte Weiterbildung und Verbesserung des im Hauptanspruch angegebenen Verfahrens möglich. Besonders vorteilhaft ist, daß der Kläranlage Abwasser und Tiefbohrspülung im Verhältnis von ca. 100 : 1 zugeführt wird. Die Zugabe der Tiefbohrspülung sollte vorzugsweise vor dem eigentlichen Klärbecken erfolgen, um schon vorab eine gute Durchmischung zu erhalten. So wird z. B. bei einem Trockenwetterabfluß von 400 Liter pro Sekunde Abwasser maximal 4 Liter pro Sekunde Tiefbohrspülung zugegeben. Durch erfindungsgemäße Zwischenlagerung der Tiefbohrspülung in einem nebengeordneten Becken ist es möglich, eine genaue dosierte Zugabe der Spülung zum Abwasser zu erreichen.

Vorteilhaft ist weiterhin, daß die Vermischung des kommunalen Abwassers mit der Spülung im Zulauf zur Kläranlage derart erfolgt, daß der Wert des Sauerstoffbedarfs (CSB-Wert) der Spülung nicht über dem nach der Bemessung der Kläranlage zulässigen Wert liegt. Der Sauerstoffbedarf ist ein geeignetes Maß für den Verschmutzungsgrad und zugleich Grundlage für die Vorkehrungen, die für die Wasserreinigung getroffen werden müssen. Man unterscheidet zwischen dem chemischen Sauerstoffbedarf (CSB) und dem biochemischen Sauerstoffbedarf (BSB). Die anfallende Spülung hat z. B. einen CSB-Wert von 1 000 mg/l. Dieser Wert wird durch dosierte Zugabe herabgesetzt.

Die Erfindung sieht weiterhin vor, daß die kommunale Kläranlage eine mechanische Abwasserreinigungsstufe mit Sandfang und Absetzbecken zur Abscheidung absetzbarer und leicht schwimmbarer Stoffe aufweist, in welcher das Bentonit als Flockungsmittel zur Abscheidung nicht- oder schwer absetzbarer Stoffe im Adsorptionsverfahren wirkt und eine biologische Abwasserreinigungsstufe zum Abbau von gelösten, organischen Bestandteilen des Abwassers, d. h. zur Bindung und zum Abbau des restlichen Teils des Bentonits sowie der Carboxymethylcellulose (CMC) an die Belebtschlammflocke. Durch die erfindungsgemäße Ausnutzung der vorhandenen Anlage wird eine optimale Entsorgung der anfallenden Tiefbohrspülung erzielt.

Im folgenden soll die Wirkungsweise eines Ausführungsbeispiels kurz erläutert werden.

Die Tiefbohrspülung wird in einer Zusammensetzung von 50 kg Bentonit und 10 kg CMC pro 1 cbm Flüssigkeit angeliefert. Neben der Kläranlage ist ein Becken zur Zwischenlagerung der Spülung vorgesehen. Schon ca. 100 m vor der eigentlichen Kläranlage erfolgt die Vermischung der Spülung mit dem zu klärenden Abwasser, durch dosierte Zugabe der Spülung zur Zufuhrleitung. Es erfolt eine dosierte Zugabe von maximal 4 l/sec. bei einem Trockenwetterabfluß von 400 l/sec. Abwasser. Hierdurch wird eine Verringerung des CSB-Wertes der Spülung erreicht. Die an sich bekannte Kläranlage für kommunale Abwasser weist ein Absetzbecken auf, welches von dem Abwasser in stark verringerter Fließgeschwindigkeit durchströmt wird, so daß sich abscheidbare Stoffe als Bodenschlamm absetzen können oder spezifisch leichtere Stoffe an der Oberfläche aufschwemmen und entfernt werden können, während sich sandige Stoffe in einem vorgeschalteten Sandfang absetzen.

In dem Absetzbecken findet nebeneinander simultan die Adsorption von Schmutzteilchen an Bentonit und die Sedimentation aller absetzbarer Stoffe statt.

Dies geschieht insbesondere durch Mitwirkung des Bentonits (Tonmineral), da dieses in abgeschwächter Konzentration als anorganisches Adsorptionsmittel wirkt und Inhaltsstoffe des Abwassers an sich bindet und sich mit diesen absetzt. Dieser Vorgang ist z. B. in herkömmlichen Erdgruben in dieser Art und Weise nicht möglich, da infolge der hohen Konzentration des Bentonits keine Entwässerung stattfindet.

Dieser mechanischen Reinigungsstufe ist eine weitere biologische Reinigungsstufe nachgeschaltet, um die restlichen Feinteile des Bentonits durch den Belebtschlamm zu binden. Die biologische Abwasserreinigung dient vornehmlich der Entfernung gelöster organischer Substanzen. Es findet jedoch auch eine Adsorption des restlichen Bentonits sowie ein Abbau der Carboxymethylcellulose statt, so daß das gereinigte Abwasser einschließlich gereinigter Tiefbohrspülung der Vorflut wieder zugeführt werden kann.

Es hat sich gezeigt, daß der anfallende Klärschlamm durch die abgesetzten Tonmineralien für die Landwirtschaft wertvoller wird. Ingesamt wird deshalb ein neues, umweltfreundliches Verfahren zur Reinigung von verbrauchten Spülungen aus Tiefbohrungen geschaffen.

## Patentansprüche

1. Verfahren zur Entsorgung verbrauchter Tiefbohrspülungen aus quellfähigem Tonmineral (Bentonit), der in Wasser aufgeschlämmt ist und einem Spülungszusatz wie Carboxymethylcellulose (CMC), dadurch gekennzeichnet, daß die Entsorgung der Spülung in einer an sich bekannten kommunalen Kläranlage für Haushalte derart erfolgt, daß die Spülung dem Zulauf zu der Kläranlage dosiert zugegeben wird, so daß in jeder Reinigungsstufe ein Abbau der organischen Inhaltsstoffe der Spülung erfolgt, wobei zur Entlastung der biologischen Stufe der Kläranlage das so verdünnte Tonmineral (Bentonit) der Spülung als anorganisches Flockungsmittel in der kommunalen Kläranlage verwendbar ist und zur Abscheidung nicht- oder schwer absetzbarer Schwebstoffe bzw. kolloidal gelöster Substanzen dient.

2. Verfahren nach Anspruch 1, dadurch gekennzeichnet, daß der Kläranlage Abwasser und Tiefbohrspülung im Verhältnis von ca. 1 : 100 zugeführt wird.

3. Verfahren nach Anspruch 1 oder 2, dadurch gekennzeichnet, daß die Vermischung des kommunalen Abwassers mit der Spülung im Zulauf zur Kläranlage derart erfolgt, daß der Wert des Sauerstoffbedarfs (CSB-Wert) der Spülung nicht über dem nach der Bemessung der Kläranlage zulässigen Wert liegt.

4. Verfahren nach einem oder mehreren der Ansprüche 1 bis 3, dadurch gekennzeichnet, daß die kommunale Kläranlage in an sich bekannter Weise eine mechanische Abwasserreinigungsstufe mit Sandfang und Absetzbecken zur Abscheidung absetzbarer und leicht schwimmbarer Stoffe aufweist, in welcher das Bentonit als Flockungsmittel zur Abscheidung nicht oder schwer absetzbarer Stoffe im Adsorptionsverfahren wirkt, und daß eine biologische Abwasserreinigungsstufe vorgesehen ist, zur Bindung und zum Abbau des restlichen Teils des Tonminerals (Bentonit) sowie der Carboxymethylcellulose (CMC) an die Belebtschlammflocke.

5. Verfahren nach einem oder mehreren der Ansprüche 1 bis 4, dadurch gekennzeichnet, daß die Tiefbohrspülung vor Zugabe zur Kläranlage in einem nebengeordneten Becken zwischengelagert wird und aus diesem Becken dosiert dem Zulauf der Kläranlage zugegeben werden kann.

## Claims

1. Process for the disposal of spent deep-well drilling muds of swellable clay mineral (bentonite) which is reduced to slime in water, and of a drilling mud additive such as carboxymethyl cellulose (CMC), characterised in that the disposal of the drilling mud takes place in a communal domestic clarification plant known *per se* in a manner in which the drilling mud is added in regulated quantity to the inlet to the clarification plant, so that a disintegration of the organic content substances of the drilling mud takes place in every purification stage, while for the relief of the biological stage of the clarification plant the clay mineral (bentonite), thus diluted, of the drilling mud is usable as inorganic flocculation agent in the communal clarification plant and serves for the separation of suspended substances which are difficult or impossible to settle out and/or of colloidally dissolved substances.

2. Process according to Claim 1, characterised in that waste water and deep-well drilling mud are fed to the clarification plant in the ratio of about 1 : 100.

3. Process according to Claim 1 or 2, characterised in that the mixing of the communal waste water with the drilling mud takes place in the inlet to the clarificatio plant in such a manner that the value of the oxygen requirement (CSB value) of the drilling mud does not lie above the permissible value according to the dimensioning of the clarification plant.

4. Process according to one or more of Claims 1 to 3, characterised in that the communal clarification plant in a manner known *per se* comprises a mechanical waste water purification stage with sand trap and settling basin for the separation of settlable and easily floating substances, in which stage the bentonite acts as flocculation agent for the separation of substances which are difficult or impossible to settle out, in the adsorption process, and in that a biological waste water purification stage is provided for the binding and disintegration of the remaining part of the clay mineral (bentonite) and of the carboxy methyl cellulose (CMC) on the activated sludge floccule.

5. Process according to one or more of Claims 1 to 4, characterised in that the deep-well drilling mud is stored meanwhile in an auxiliary basin before feeding to the clarification plant and can be supplied from this basin in regulated quantity to the inlet of the clarification plant.

## Revendications

1. Procédé de traitement de boues de forages consommées à base d'argile susceptible de gonflement (bentonite), qui est mise en suspension dans l'eau, et d'un additif de lavage comme la carboxyméthylcellulose, caractérisé en ce que le traitement des boues est réalisé dans une station d'épuration municipale connue en elle-même pour des habitations de sorte que les boues sont ajoutées, de façon dosée, à l'entrée de la station d'épuration de façon que, à chaque étape de l'épuration, une décomposition des matières organiques des boues se produit, par quoi l'argile (bentonite) ainsi diluée des boues est utilisable comme floculant inorganique dans la station d'épuration municipale pour décharger l'étape biologique de la station d'épuration et sert pour la séparation des matières en suspension difficilement décantables ou non décantables ou des substances dissoutes sous forme colloïdale.

2. Procédé selon la revendication 1, caractérisé en ce que les eaux usées et les boues de forages sont amenées à la station d'épuration dans un rapport d'environ 100 : 1.

3. Procédé selon la revendication 1 ou 2, caractérisé en ce que le mélange des eaux usées municipales avec les boues se produit à l'entrée de la station d'épuration de sorte que la valeur de la demande en oxygène des boues ne dépasse pas la valeur admissible d'après le dimensionnement de la station d'épuration.

4. Procédé selon l'une ou plusieurs des revendications 1 à 3, caractérisé en ce que la station d'épuration municipale comporte, de façon connue en soi, une étape d'épuration des eaux usées mécanique avec un séparateur de sable et un décanteur pour la séparation des matières décantables et de celles qui peuvent facilement flotter, dans laquelle la bentonite agit comme floculant pour la séparation des matières difficilement décantables ou non décantables dans un procédé d'adsorption, et ce qu'une étape d'épuration biologique des eaux usées est prévue pour la liaison et la décomposition de la partie restante de l'argile (bentonite), ainsi que de la carboxyméthylcellulose, sur les flocs de boues activées.

5. Procédé selon l'une ou plusieurs des revendications 1 à 4, caractérisé en ce que les boues de forages, avant leur addition à la station d'épuration, sont entreposées dans un bassin proche et peuvent être amenées, de façon dosée, à l'entrée de la station d'épuration en sortant de ce bassin.